# EUROPEAN PATENT APPLICATION

(11) **EP 4 614 413 A1**
(43) Date of publication of application: **10.09.2025**
(21) Application number: 23884690.1
(22) Date of filing: 25.10.2023
(51) Int. Cl.: G06Q 10/087

(54) **TRANSPORTATION SCHEDULING METHOD AND APPARATUS FOR VERTICAL WAREHOUSE**

(30) Priority: 02.11.2022 CN 202211362958
(71) Applicant: Beijing Geekplus Technology Co. Ltd, Beijing 100102 (CN)
(72) Inventor: SHEN, Xianli, Beijing 100102 (CN); CAO, Zheng, Beijing 100102 (CN); HAN, Hao, Beijing 100102 (CN); ZHAO, Chengye, Beijing 100102 (CN); WEI, Xiguang, Beijing 100102 (CN); TAN, Wenzhe, Beijing 100102 (CN); LI, Hongbo, Beijing 100102 (CN)
(74) Representative: Manna, Sara
(86) International application number: PCT/CN2023/126507
(87) International publication number: WO 2024/093758

(57) **Abstract**

The present disclosure provides a transportation scheduling method and apparatus for a vertical warehouse. The transportation scheduling method for the vertical warehouse comprises: according to task information of a task to be executed, determining a target unit to be transported; according to article attribute information in the target unit to be transported, screening at least one candidate aisle in the vertical warehouse conforming to the article attribute information; according to distribution information of the at least one candidate aisle in multiple storage levels and current level information of the target unit, screening at least one target storage level from the multiple storage levels; according to current position information of the target unit and storage position information of the candidate aisle in the at least one target storage level, determining a target storage position; scheduling a transportation device to transport the target unit to the target storage position for storage. By means of screening a candidate aisle, and screening a target storage level according to the candidate aisle, a target storage position is determined, and the storage position is reasonably planned, improving storage position utilization and transportation scheduling efficiency.

## Description

### CROSS-REFERENCE TO RELATED APPLICATION

This application claims the priority to Chinese Patent Application No. 202211362958.6, filed on November 2, 2022, the entire contents of which are incorporated herein by reference.

### FIELD

The present invention relates to the technical field of warehousing and logistics, and more particularly to a handling scheduling method for a stereoscopic warehouse, a handling scheduling apparatus for a stereoscopic warehouse, a computing device and a computer-readable storage medium.

### BACKGROUND

With the rapid development of e-commerce, the number of users' orders is increasing exponentially, and a warehouse needs to store a large number of items. How to handle these items efficiently and how to plan storage locations reasonably have become the key to improving warehousing efficiency.

In the related art, items are typically handed manually by a worker: after receiving a task, the worker determines an item to be handled and a handling location, and goes to the handling location to handle the item to be handled. Since it consumes significant time and manpower for the worker to handle items manually, a more efficient and convenient method for handling scheduling is needed.

### SUMMARY

A handling scheduling method for a stereoscopic warehouse is provided in an embodiment of the present invention. The present invention also relates to a handling scheduling apparatus for a stereoscopic warehouse, a computing device and a computer-readable storage medium.

According to some embodiments of the present invention, a handing scheduling method for a stereoscopic warehouse is provided. The stereoscopic warehouse includes a plurality of storage floors, and the plurality of storage floors each includes a plurality of laneways. The handing scheduling method for the stereoscopic warehouse includes determining a target unit to be handled according to task information of a task to be executed, selecting, according to item attribute information of the target unit to be handled, at least one candidate laneway in the stereoscopic warehouse, in which the at least one candidate laneway conforms to the item attribute information, selecting at least one target storage floor from the plurality of storage floors according to distribution information of the at least one candidate laneway in the plurality of storage floors and current floor information of the target unit to be handled, determining a target storage location in the at least one target storage floor according to current location information of the target unit to be handled and storage location information of a candidate laneway in the at least one target storage floor, and scheduling a handling device to handle the target unit to be handled to the target storage location for storage.

According to some embodiments of the present invention, a handling scheduling apparatus for a stereoscopic warehouse is provided. The stereoscopic warehouse includes a plurality of storage floors, and the plurality of storage floors each includes a plurality of laneways. The handling scheduling apparatus for the stereoscopic warehouse includes a first determination module configured to determine a target unit to be handled according to task information of a task to be executed, a first selection module configured to select, according to item attribute information of the target unit to be handled, at least one candidate laneway in the stereoscopic warehouse, in which the at least one candidate laneway conforms to the item attribute information, a second selection module configured to select at least one target storage floor from the plurality of storage floors according to distribution information of the at least one candidate laneway in the plurality of storage floors and current floor information of the target unit to be handled, a second determination module configured to determine a target storage location in the at least one target storage floor according to the current location information of the target unit to be handled and the storage location information of a candidate laneway in the at least one target storage floor, and a scheduling module configured to schedule a handling device to handle the target unit to be handled to the target storage location for storage.

According to some embodiments of the present invention, a computing device is provided. The computing device includes a memory, and a processor. The memory is configured to store therein computer-executable instructions, and the processor is configured to execute the computer-executable instructions to determine a target unit to be handled according to task information of a task to be executed, select, according to item attribute information of the target unit to be handled, at least one candidate laneway in a stereoscopic warehouse, in which the at least one candidate laneway conforms to the item attribute information, select at least one target storage floor from a plurality of storage floors according to distribution information of the at least one candidate laneway in the plurality of storage floors and current floor information of the target unit to be handled, determine a target storage location in the at least one target storage floor according to current location information of the target unit to be handled and storage location information of a candidate laneway in the at least one target storage floor, and schedule a handling device to handle the target unit to be handled to the target storage location for storage.

According to some embodiments of the present invention, a computer-readable storage medium is provided. The computer-readable storage medium has stored therein computer instructions that, when executed by a processor, cause the processor to implement steps of the handling scheduling method for the stereoscopic warehouse.

According to the handing scheduling method for the stereoscopic warehouse provided in the embodiment of the present invention, the target unit to be handled is determined according to the task information of the task to be executed, the candidate laneway is selected according to the item attribute information of the target unit to be handled, the target storage floor is further selected according to the candidate laneway, and finally the target storage location in the target floor is determined, thus planning the storage location reasonably, and improving a utilization rate of the storage location and an efficiency of handling scheduling.

### BRIEF DESCRIPTION OF THE DRAWINGS

FIG. 1 is a frame diagram showing a handling scheduling system for a stereoscopic warehouse according to some embodiments of the present invention.
FIG. 2 is a flow chart showing a handling scheduling method for a stereoscopic warehouse according to some embodiments of the present invention.
FIG. 3A is a schematic diagram showing a storage floor in a stereoscopic warehouse according to some embodiments of the present invention.
FIG. 3B is a flow chart showing a handling scheduling method for a stereoscopic warehouse applied in the field of warehousing and logistics according to some embodiments of the present invention.
FIG. 4 is a flow chart showing determination of a target storage location in a handling scheduling method for a stereoscopic warehouse according to some embodiments of the present invention.
FIG. 5 is a schematic diagram showing a target storage floor in a stereoscopic warehouse according to some embodiments of the present invention.
FIG. 6 is a schematic diagram showing a storage floor in another stereoscopic warehouse according to some embodiments of the present invention.
FIG. 7 is a schematic diagram showing a handling scheduling apparatus for a stereoscopic warehouse according to some embodiments of the present invention.
FIG. 8 is a block diagram showing a computing device according to some embodiments of the present invention.

### DETAILED DESCRIPTION

Numerous details are set forth in the following description to facilitate a full understanding of the present invention. However, the present invention may be implemented in many other ways different from those described herein, and those skilled in the art may make similar generalizations without departing from the contents of the present invention, so the present invention is not limited by embodiments disclosed below.

Terms used in one or more embodiments of the present invention are only for the purpose of describing embodiments, but should not be construed to limit one or more embodiments of the present invention. As used in one or more embodiments of the present invention and the appended claims, "a/an," "the," and "said" in singular forms are intended to include plural forms, unless clearly indicated in the context otherwise. It should also be understood that the term "and/or" used in one or more embodiments of the present invention represents and contains any one or all possible combinations of one or more associated listed items.

It is to be understood that, although terms such as first, second, and the like may be used in one or more embodiments of the present invention for describing various information, these information should not be limited by these terms. These terms are only used for distinguishing information of the same type from each other. For example, the first may also be referred to as the second, and similarly, the second may also be referred to as the first, without departing from the scope of one or more embodiments of the present invention. As used herein, the term "if" may be construed to mean "when" or "upon" or "in response to determining" depending on the context.

First, terms involved in one or more embodiments of the present invention are explained.

Four-way Shuttle Vehicle: A four-way shuttle vehicle is an autonomous mobile robot capable of moving in four directions (forward, backward, left and right) within a plane.

Automated Guided Vehicle (AGV), also known as an autonomous mobile robot, is characterized by unmanned driving. Equipped with an automatic navigation system, the AGV may automatically drive along a predefined path without manual intervention, and automatically handle items or materials from an origin point to a designated destination.

Laneway: a laneway is an area in a stereoscopic warehouse, and a row of storage location is correspondingly arranged in the laneway.

A handling scheduling method for a stereoscopic warehouse is provided in the present invention. The present invention also relates to a handling scheduling apparatus for a stereoscopic warehouse, a computing device and a computer-readable storage medium which are described in detail one by one in embodiments below.

Automatic stereoscopic warehouses are pivotal components of modern logistics. A four-way shuttle vehicle-based stereoscopic warehouse, as one of the automatic stereoscopic warehouses, represents a leading development trend in the automatic stereoscopic warehouses. Allocation of storage locations of the four-way shuttle vehicle-based stereoscopic warehouse critically impacts four-way shuttle vehicle's average travel time and system efficiency. A multi-depth four-way shuttle vehicle-based stereoscopic warehouse achieves ultra-dense storage, and may store more items and has higher storage capacity. A depth of a laneway generally includes four or more storage locations, and each of the storage locations is configured to store a unit to be handled (such as a pallet) for placing items. The unit to be handled may store medium and large items. Since a plurality of units to be handled that carry items may be placed in each laneway of the multi-depth stereoscopic warehouse, how to plan storage locations of a multi-layer multi-depth four-way shuttle vehicle-based stereoscopic warehouse to make reasonable use of the storage locations and perform shipping and inbound operations related to handling scheduling more efficiently is an urgent problem to be solved.

In a stereoscopic warehouse, items are typically handed manually by a worker. For example, after receiving a task, a worker determines an item to be handled and a handling location, and goes to the handling location to handle the item to be handled. Since it consumes significant time and manpower for the worker to handle items manually, a more efficient and convenient method for handling scheduling is needed.

In order to solve the above problems, a handing scheduling method for a stereoscopic warehouse provided in some embodiments of the present invention. According to the method, a candidate laneway is selected, a target storage floor is selected according to the candidate laneway, and a target storage location in the target floor is determined, thus planning the storage location reasonably and reducing waste of the storage location, improving a utilization rate of the storage location and reducing unnecessary movement, and improving an efficiency of handing scheduling. That is, according to the handling scheduling method provided in the present invention, the storage location in the stereoscopic warehouse may be allocated reasonably, so as to improve the handling efficiency.

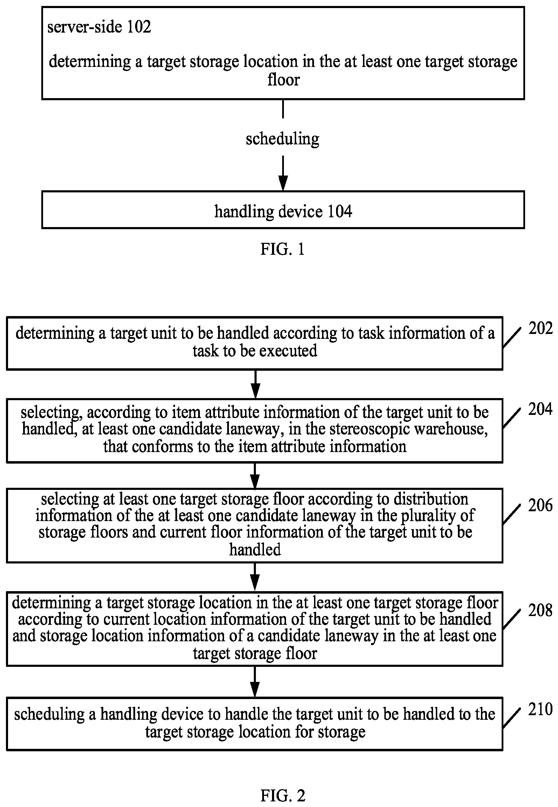

FIG. 1 is a frame diagram showing a handling scheduling system for a stereoscopic warehouse according to some embodiments of the present invention. The handling scheduling system for the stereoscopic warehouse includes a server-side 102 and a handling device 104.

The server-side 102 is configured to determine a target unit to be handled according to task information of a task to be executed, select, according to item attribute information of the target unit to be handled, at least one candidate laneway in a stereoscopic warehouse, in which the at least one candidate laneway conforms to the item attribute information, select at least one target storage floor according to distribution information of the at least one candidate laneway in the plurality of storage floors and current floor information of the target unit to be handled, determine a target storage location in the at least one target storage floor according to current location information of the target unit to be handled and storage location information of a candidate laneway in the at least one target storage floor, and schedule the handling device 104 to handle the target unit to be handled to the target storage location for storage.

By applying a solution of an embodiment of the present invention, the candidate laneway is selected according to the item attribute information, the target storage floor is selected according to the candidate laneway, the target storage location in the target floor is determined, and the handling device is scheduled to handle the target unit to be handled to the target storage location for storage, thus planning the storage location reasonably, and improving a utilization rate of the storage location and an efficiency of handling scheduling.

FIG. 2 is a flow chart showing a handling scheduling method for a stereoscopic warehouse according to some embodiments of the present invention. As shown in FIG. 2, the method includes steps as follows.

In step 202, a target unit to be handled is determined according to task information of a task to be executed.

In some embodiments, in order to more reasonably handle and schedule items in a stereoscopic warehouse, the target unit to be handled may be determined according to the task information of the task to be executed.

Illustratively, the task to be executed is a task waiting to be executed, and includes a shipping task (may also referred to as an outbound task) and an inbound task, which may be a task in various scenarios such as warehousing and logistics, factory handling, and hotel or restaurant handling, etc. An application scenario of the task to be executed is not limited in the embodiment of the present invention.

In some examples, the task information of the task to be executed includes, but is not limited to, a task type, a task number, a task priority, etc. of the task to be executed. A unit to be handled is a unit configured to handle items, which may be a box structure or a platform structure. For example, the unit to be handled includes, but is not limited to, a single container, a multi-layer container with a partition in the middle, a turnover container, a carton, an original container, a pallet, etc. A type of the unit to be handled is not limited in the embodiment of the present invention, and the type of the unit to be handled may be selected according to an actual situation.

In some embodiments, taking the task information of the task to be executed as the task type as an example, the task type may include a shipping task and an inbound task. In step 202, the target unit to be handled may be determined according to the task type of the task to be executed. Illustratively, before the above step 202, it may be determined whether a plurality of initial tasks include a shipping task. If the plurality of initial tasks include the shipping task, the task to be executed is determined from the shipping task.

Illustratively, since the shipping task is to transfer the target unit to be handled from an original location to a target storage location, if the shipping task and the inbound task exist at the same time, the shipping task may be executed preferentially to reduce unnecessary movement during execution of the inbound task.

If there are a plurality of initial tasks, a task type of the initial tasks may be determined, and according to the task type, it is determined whether the plurality of initial tasks include a shipping task. If the shipping task exists among the plurality of initial tasks, the task to be executed is determined from the shipping task. If no shipping task exists among the plurality of initial tasks, the task to be executed is determined from the plurality of initial tasks.

In some embodiments, item information of the initial task may be obtained, and it is determined whether an item corresponding to the initial task is stored in the stereoscopic warehouse. If the item is stored in a storage location in the stereoscopic warehouse, it is determined that the initial task is a shipping task. In other embodiments, a pre-trained classification model may be used to classify the initial task to determine whether the initial task is a shipping task. The classification model may be obtained by training a neural network such as a convolutional neural network (CNN) and a recurrent neural network (RNN). An implementation for determining whether the plurality of initial tasks include the shipping task is not limited in the embodiment of the present invention.

In some examples, if the plurality of initial tasks include at least two shipping tasks, the task to be executed may be determined from the at least two shipping tasks, according to a priority of each shipping task of the at least two shipping tasks.

By applying a solution of an embodiment of the present invention, it is determined whether the plurality of initial tasks include the shipping task, and in a case that the plurality of initial tasks include the shipping task, the task to be executed is determined from the shipping task, the shipping task may be executed preferentially, thus reducing unnecessary movement during execution of the inbound task and improving the efficiency of handling scheduling.

In some embodiments, if the task to be executed is an inbound task, the target unit to be handled is a unit to be handled and waiting to be stored. If the task to be executed is a shipping task, the target unit to be handled may be determined according to storage location information of a unit to be shipped corresponding to the shipping task. The unit to be shipped corresponding to the shipping task is a unit to be handled and waiting to be shipped corresponding to the shipping task, and the target unit to be handled is a unit to be handled that blocks the unit to be shipped from being shipped.

Illustratively, determining the target unit to be handled according to the task information of the task to be executed may include determining a unit to be shipped corresponding to the task to be executed in a case that the task to be executed is a shipping task, determining at least one candidate unit to be handled according to storage location information of the unit to be shipped, and determining the target unit to be handled from the at least one candidate unit to be handled according to depth information of the at least one candidate unit to be handled in a laneway.

The unit to be shipped is a unit to be handled and waiting to be shipped, and the storage location information of the unit to be shipped includes a storage floor, a storage laneway, and storage depth information where the unit to be shipped is located, i.e. Since the shipping task usually includes the storage location information where the unit to be shipped is located, the unit to be shipped corresponding to the task to be executed may be determined according to the storage location information.

After the unit to be shipped is determined, when the unit to be shipped is handled to be shipped, the unit to be handled that blocks the unit to be shipped from being shipped may be determined according to the storage location information of the unit to be shipped, and the unit to be handled that blocks the unit to be shipped from being shipped may be determined as the at least one candidate unit to be handled. Illustratively, according to the storage location information of the unit to be shipped, it may be determined whether a storage location adjacent to the unit to be shipped is available. If the storage location adjacent to the unit to be shipped is an available storage location, it is determined whether a storage location adjacent to the available storage location is available, until a shipping route composed of available storage locations is found, which may realize the unit to be shipped to be shipped, and the unit to be shipped is handled according to the shipping route to complete the shipping task. If a storage location adjacent to the unit to be shipped is not an available storage location, a unit to be handled on this adjacent storage location is a unit to be handled that blocks the unit to be shipped from being shipped, which is also referred to as a candidate unit to be handled (also may be referred to as a blocking unit to be handled or a blocking tray). It is further determined whether a storage location adjacent to the candidate unit to be handled is an available storage location. If the storage location adjacent to the candidate unit to be handled is not the available storage location, a unit to be handled at the storage location adjacent to the candidate unit to be handled is also determined as the candidate unit to be handled, until a shipping route composed of available storage locations is found, which may realize the unit to be shipped to be shipped.

In some embodiments, when the unit to be handled that blocks the unit to be shipped from being shipped is determined, an exit of the laneway is taken as a starting point, depth information of the unit to be handled in a laneway where the unit to be shipped is located may be determined, and the depth information of the unit to be handled may be compared with depth information of the unit to be shipped. When the unit to be shipped is shipped, since the unit to be handled whose depth information is less than the depth information of the unit to be shipped may block the unit to be shipped from being shipped, and thus the unit to be handled whose depth information is less than the depth information of the unit to be shipped may be determined as the candidate unit to be handled.

In some embodiments, in a case that the task to be executed is a shipping task, a unit to be shipped corresponding to the task to be executed is determined, at least one unit to be handled that blocks the unit to be shipped from being shipped is determined as at least one candidate unit to be handled, according to the storage location information of the unit to be shipped, and the target unit to be handled is determined from the at least one candidate unit to be handled, according to depth information of the at least one candidate unit to be handled in a laneway.

In order to determine the target unit to be handled more reasonably and accurately, reduce the number of movements of the target unit to be handled in a process of handing scheduling, and further improve the efficiency of handing scheduling, after the at least one candidate unit to be handled is determined, the target unit to be handled may be determined from the at least one candidate unit to be handled, according to the depth information of the at least one candidate unit to be handled in the laneway.

Illustratively, determining the target unit to be handled from the at least one candidate unit to be handled according to the depth information of the at least one candidate unit to be handled in the laneway may include determining the target unit to be handled from the at least one candidate unit to be handled according to the depth information of the at least one candidate unit to be handled in the laneway and according to a determination rule of an ascending order of the depth information. That is, when the unit to be shipped is shipped, the target unit to be handled is determined from the at least one candidate unit to be handled that blocks the unit to be shipped from being shipped, according to a depth magnitude. That is, a candidate unit to be handled with a small depth is determined as the target unit to be handled, and then a candidate unit to be handled with a large depth is determined as the target unit to be handled.

In some examples, the depth information of the at least one candidate unit to be handled in the laneway may be obtained by taking an exit of the laneway as a starting point and taking a rank of the candidate unit to be handled in the laneway as a depth of the candidate unit to be handled. For example, if the exit of the laneway is determined as the starting point and the candidate unit to be handled is located at the fifth storage location in the laneway, the depth information is 5. Alternatively, a distance of the candidate unit to be handled from the exit of the laneway may be directly determined as the depth information. For example, if the candidate unit to be handled is 6 meters away from the exit of the laneway, the depth information is 6 meters.

Illustratively, assuming that depth information of a candidate unit to be handled 1 in the laneway is 5, depth information of a candidate unit to be handled 2 in the laneway is 7, and depth information of a candidate unit to be handled 3 in the laneway is 6, the candidate unit to be handled 1, the candidate unit to be handled 2, and the candidate unit to be handled 3 are ranked in an ascending order of the depth information. A candidate unit to be handled with smallest depth information is determined as the candidate unit to be handled 1, and the candidate unit to be handled 1 is determined as the target unit to be handled.

By applying a solution of an embodiment of the present invention, the depth information of the at least one candidate unit to be handled in the laneway is obtained, and the target unit to be handled is determined from the at least one candidate unit to be handled, according to the determination rule of the ascending order of the depth information, so that the target unit to be handled with a small depth is handled preferentially, the handing scheduling process is more convenient and reasonable, and the efficiency of handing scheduling is further improved.

In other embodiments of the present invention, if a plurality of exits exist in the laneway, depths of the candidate unit to be handled from individual exits may be determined, and a minimum depth may be determined as the depth information of the candidate unit to be handled in the laneway. Illustratively, if the laneway has an exit 1 and an exit 2, and a depth of a candidate unit to be handled A from the exit 1 is 7 and a depth of the candidate unit to be handled A from the exit 2 is 5, the depth of 5 is determined as the depth information of the candidate unit to be handled. Further, a location of a hoist and the exit of the laneway may also be considered, a candidate unit to be handled that is close to the hoist and has a small depth may be determined as the target unit to be handled.

In some embodiments, the laneway in the stereoscopic warehouse may have one entrance and exit, and may also have two entrances and exits, which is not limited in the embodiment of the present invention. In the above embodiments, the laneway has one entrance and exit, and when the unit to be shipped is handled from the entrance and exit, there is at least one candidate unit to be handled that blocks the unit to be shipped from being shipped. If there are a plurality of candidate units to be handled that block the unit to be shipped from being shipped, it needs to rank the plurality of candidate units to be handled in an ascending order of depth, and a candidate unit to be handled with a small depth is determined as the target unit to be handled preferentially. That is, according to the ascending order of the depth, a unit to be handled with a small depth is handled first, and then a unit to be handled with a large depth is handled.

In a case that there are two entrances and exits in the laneway in the stereoscopic warehouse, when the candidate unit to be handled that blocks the unit to be shipped from being shipped is determined according to the storage location information of the unit to be shipped, shipping routes may be determined in a plurality of handling directions and a candidate unit to be handled corresponding to each shipping route may be determined, based on a setting location of the entrance and exit of the laneway.

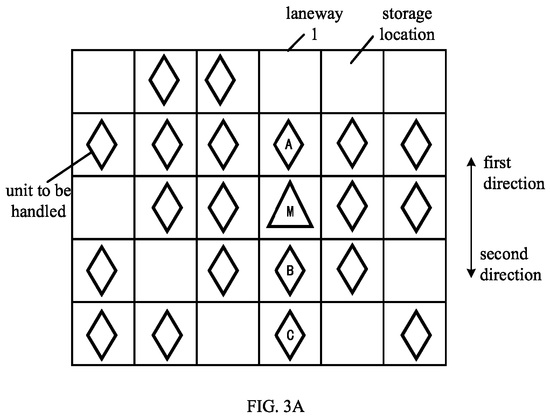

FIG. 3A is a schematic diagram showing a storage floor in a stereoscopic warehouse according to some embodiments of the present invention. In FIG. 3A, a square frame represents a storage location, a diamond-shaped frame represents a unit to be handled, a triangle-shaped frame represents a unit to be shipped, and a square frame that does not contain a diamond-shaped frame represents that no unit to be handled is placed at a storage location (that is, the storage location is an available storage location). As shown in FIG. 3A, as an example, it is assumed that the task to be executed is a shipping task, the unit to be shipped corresponding to the shipping task is a unit to be shipped M, and a laneway 1 has two upper and lower entrances and exits. Since the laneway 1 has two upper and lower entrances and exits, when the unit to be shipped is shipped, the unit to be shipped may be handled from the upper entrance and exit, and may also be handled from the lower entrance and exit. Therefore, when the candidate unit to be handled is determined, a candidate unit to be handled corresponding to each shipping route may be determined from two handling directions (a first direction and a second direction as shown in FIG. 3A).

For example, as shown in FIG. 3A, according to storage location information of a unit to be shipped M, it is determined that a unit to be handled A exists at a storage location adjacent to the unit to be shipped M in the first direction. When the unit to be shipped M is shipped in the first direction, the unit to be handled A at the adjacent storage location blocks the unit to be shipped M from being shipped, and thus the unit to be handled A may be determined as the candidate unit to be handled. It is further determined whether a storage location adjacent to the unit to be handled A in the first direction is an available storage location. Since the storage location adjacent to the unit to be handled A in the first direction is the available storage location, it may be determined that, when the unit to be shipped M is shipped in the first direction, the candidate unit to be handled that blocks the unit to be shipped M from being shipped only include the unit to be handled A.

For another example, as shown in FIG. 3A, according to the storage location information of the unit to be shipped M, it is determined that a unit to be shipped B exists at a storage location adjacent to the unit to be shipped M in the second direction. When the unit to be shipped M is shipped in the second direction, the unit to be handled B at the adjacent storage location blocks the unit to be shipped M from being shipped, and thus the unit to be handled B may be determined as the candidate unit to be handled. It is further determined whether a storage location adjacent to the unit to be handled B in the second direction is an available storage location. Since a unit to be handled C exists at the storage location adjacent to the unit to be handled B, it may be determined that, when the unit to be shipped M is shipped in the second direction, the candidate units to be handled that blocks the unit to be shipped M from being shipped include the unit to be handled B and the unit to be handled C.

In some embodiments, if a plurality of shipping routes are determined in a plurality of handling directions, and a candidate unit to be handled corresponding to each shipping route is determined, a target shipping route may be determined from the plurality of shipping routes, according to a numeric count of candidate unit to be handled and/or the depth information of the candidate unit to be handled corresponding to each shipping route, and the target unit to be handled may be determined according to the candidate unit to be handled corresponding to the target shipping route.

In some examples, if numeric counts of candidate units to be handled corresponding to the plurality of shipping routes are different, a shipping route with a smallest numeric count of the candidate unit to be handled is determined as the target shipping route, and the target unit to be handled is determined from the at least one candidate unit to be handled corresponding to the target shipping route. If at least two shipping routes of the plurality of shipping routes have the smallest numeric count of the candidate unit to be handled, total depth information of each shipping route is determined according to depth information of a candidate unit to be handled corresponding to the at least two shipping routes, the target shipping route is determined among the plurality of shipping routes according to the total depth information of each shipping route, and the target unit to be handled is determined according to the at least one candidate unit to be handled corresponding to the target shipping route.

Illustratively, the depth information of candidate units to be handled corresponding to each shipping route of at least two shipping routes may be summed to obtain the total depth information of each shipping route, and a shipping route with smallest total depth information of individual shipping routes may be determined as the target shipping route. After the target shipping route is determined, the target unit to be handled may be determined from the at least one candidate unit to be handled corresponding to the target shipping route, according to the depth information of the at least one candidate unit to be handled corresponding to the target shipping route and according to the determination rule of the ascending order of the depth information. It is to be noted that when the depth information of the candidate unit to be handled corresponding to each shipping route is determined, the depth information of each candidate unit to be handled in each shipping route in the laneway is determined by taking the exit of the laneway corresponding to the shipping route as the starting point.

For example, as shown in FIG. 3A, there is only one candidate unit to be handled corresponding to a shipping route 1 for shipping in the first direction, namely the unit to be handled A, and there are two candidate units to be handled corresponding to a shipping route 2 for shipping in the second direction, namely the unit to be handled B and the unit to be handled C, respectively. Since a numeric count of the candidate unit to be handled corresponding to the shipping route 1 is less than numeric counts of the candidate units to be handled corresponding to the shipping route 2, the shipping route 1 may be determined as the target shipping route. Since the shipping route 1 includes only one candidate unit to be handled A, the candidate unit to be handled A may be determined as the target unit to be handled.

For another example, there are two candidate units to be handled corresponding to a shipping route 1, namely a candidate unit to be handled 1 and a candidate unit to be handled 2, respectively, and there are also two candidate units to be handled corresponding to a shipping route 2, namely a candidate unit to be handled 3 and a candidate unit to be handled 4, respectively. Since numeric counts of the candidate units to be handled corresponding to the shipping route 1 is the same as numeric counts of the candidate units to be handled corresponding to the shipping route 2, depth information of the candidate units to be handled corresponding to each shipping route may be further determined. As an example, assuming that depth information of the candidate unit to be handled 1 is 2, depth information of the candidate unit to be handled 2 is 3, depth information of the candidate unit to be handled 3 is 1 and depth information of the candidate unit to be handled 4 is 2, it may be determined that total depth information corresponding to the shipping route 1 is 5 and total depth information corresponding to the shipping route 2 is 3. Since the total depth information corresponding to the shipping route 2 is less than the total depth information corresponding to the shipping route 1, the shipping route 2 may be determined as the target shipping route. Since there are two candidate units to be handled corresponding to the shipping route 2, when the candidate unit to be handled 3 and the candidate unit to be handled 4 corresponding to the shipping route 2 are handled, the candidate unit to be handled 3 with small depth information may be handled first according to the depth information of the candidate unit to be handled 3 and the candidate unit to be handled 4, so the candidate unit to be handled 3 may be determined as the target unit to be handled.

In step 204, at least one candidate laneway, in the stereoscopic warehouse, that conforms to the item attribute information is selected according to item attribute information of the target unit to be handled.

In some embodiments, after the target unit to be handled is determined according to the task information of the task to be executed, the at least one candidate laneway, in the stereoscopic warehouse, that conforms to the item attribute information may be selected according to the item attribute information of the target unit to be handled.

Illustratively, items in the target unit to be handled may be of various types, including but not limited to textiles, daily necessities, cosmetics, etc. The item attribute information is information of item itself, including but not limited to a type, volume, material and weight, etc. of an item. Type of information included in the item attribute information is not limited in the embodiment of the present invention, and may be selected according to an actual situation. The stereoscopic warehouse includes a plurality of laneways, and each laneway includes a plurality of storage locations, on which the unit to be handled may be placed to achieve storage of items. In an embodiment of the present invention, item attribute information carried by units to be handled in the same laneway is the same.

In a practical application, there are many ways to select the at least one candidate laneway, in the stereoscopic warehouse, that conforms to the item attribute information, according to the item attribute information of the target unit to be handled, which is not limited in the present invention. In some embodiments, the staff may recommend at least one candidate laneway, in the stereoscopic warehouse, that conforms to the item attribute information, according to the item attribute information of the target unit to be handled. In other embodiments, a matching laneway may be determined according to the item attribute information of the target unit to be handled, and a candidate laneway may be determined from the matching laneway, according to the storage location information of the matching laneway.

Illustratively, selecting, according to the item attribute information of the target unit to be handled, the at least one candidate laneway, in the stereoscopic warehouse, that conforms to the item attribute information may include determining at least one matching laneway in the stereoscopic warehouse according to the item attribute information of the target unit to be handled, and selecting at least one candidate laneway exhibiting an unobstructed available storage location according to storage location information of the at least one matching laneway. The unobstructed available storage location is an available storage location in which storage locations from an entrance of the laneway to the unobstructed available storage location are all in an available state. That is, there is no other unit to be handled that block the unit to be handled from being handled from the entrance of the laneway to the unobstructed available storage location, and the unit to be handled may be handled to the unobstructed available storage location directly.

Since the item attribute information carried by the units to be handled in the same laneway is the same, the at least one matching laneway may be determined among the plurality of laneways of the stereoscopic warehouse according to the item attribute information of the target unit to be handled. The storage location information includes a state of the storage location, such as an available state, a stored state, etc., and also includes a number, a position and the like of the storage location.

In a practical application, there are many ways to determine the at least one matching laneway in the stereoscopic warehouse, according to the item attribute information of the target unit to be handled, which is not limited in the present invention. In some embodiments, the at least one matching laneway may be determined according to the item attribute information of the target unit to be handled and laneway attribute information of each laneway.

Illustratively, determining the at least one matching laneway in the stereoscopic warehouse according to the item attribute information of the target unit to be handled may include acquiring laneway attribute information of each laneway in the stereoscopic warehouse, determining a correlation degree between the target unit to be handled and the laneway according to the item attribute information and the laneway attribute information, and determining the at least one matching laneway in the stereoscopic warehouse according to the correlation degree.

The laneway attribute information may include attributes of stored items in the laneway, and may also include a number of the laneway, a total depth of the laneway, etc. Type of information included in the laneway attribute information is not limited in the present invention, and may be selected according to the actual situation. It is to be noted that there are many ways to acquire the laneway attribute information of each laneway in the stereoscopic warehouse. In some embodiments, the laneway attribute information of each laneway may be searched directly in a laneway database. In other embodiments, an instruction to acquire the laneway attribute information of each laneway in the stereoscopic warehouse may be sent to a laneway manager, and the laneway attribute information fed back by the laneway manager may be received.

Illustratively, after the laneway attribute information of each laneway in the stereoscopic warehouse is acquired, the item attribute information and the laneway attribute information may be compared to determine the correlation degree between the target unit to be handled and the laneway. If the item attribute information and the laneway attribute information are exactly the same, the correlation degree between the target unit to be handled and the laneway is 1. If the item attribute information and the laneway attribute information are completely different, the correlation degree between the target unit to be handled and the laneway may be considered as -1. Since the plurality of laneways in the stereoscopic warehouse may include a laneway in which all storage locations are available, it may be considered that the correlation degree between the target unit to be handled and the laneway in which all storage locations are available is 0.

In some examples, a preset correlation degree threshold may be acquired, and the correlation degree between the target unit to be handled and the laneway may be selected according to the correlation degree threshold, and a laneway whose correlation degree is greater than the correlation degree threshold may be determined as the matching laneway. In other examples, the plurality of laneways in the stereoscopic warehouse may be ranked in a descending order of the correlation degree, and the first N laneways with high correlation degree may be taken as the matching laneway.

By applying a solution of an embodiment of the present invention, the laneway attribute information of each laneway in the stereoscopic warehouse is acquired, the correlation degree between the target unit to be handled and the laneway is determined according to the item attribute information and the laneway attribute information, and the at least one matching laneway is determined in the stereoscopic warehouse, according to the correlation degree. In a process of determining the target storage location, the item attribute information is taken into consideration, and the storage locations are partitioned reasonably, so that subsequent handing scheduling may be performed directly according to partitions, thus improving the efficiency of handing scheduling.

Illustratively, after the at least one matching laneway is determined in the stereoscopic warehouse, according to the item attribute information of the target unit to be handled, since all storage locations in some matching laneways are already stored or some available storage locations are blocked by other units to be handled, the unit to be handled cannot be directly handled to the available storage location. Therefore, the at least one candidate laneway exhibiting the unobstructed available storage location may be selected according to the storage location information of the at least one matching laneway.

In some examples, when the at least one candidate laneway exhibiting the unobstructed available storage location is selected according to the storage location information of the at least one matching laneway, storage location information of all storage location in the matching laneway may be acquired. The storage location information includes state information, and the state information is configured to indicate whether the storage location is available or not. An available storage location in the matching laneway is selected according to the state information, and it is determined whether storage locations from an entrance of the laneway to the available storage location are all available storage locations. If the storage locations from the entrance of the laneway to the available storage location are all the available storage locations, it means that there is no blocking unit to be handled that blocks the available storage location around the available storage location, and the available storage location is an unobstructed available storage location, and the matching laneway exhibiting the unobstructed available storage location may be determined as the candidate laneway.

By applying a solution of an embodiment of the present invention, according to the item attribute information of the target unit to be handled, the at least one matching laneway is determined in the stereoscopic warehouse, and the at least one candidate laneway exhibiting the unobstructed available storage location is selected according to the storage location information of the at least one matching laneway, to ensure that in a process of handing scheduling, the unit to be handled may be directly handled to the storage location in the candidate laneway without being blocked by other units to be handled, thus improving the efficiency of handing scheduling.

In step 206, at least one target storage floor is selected according to distribution information of the at least one candidate laneway in the plurality of storage floors and current floor information of the target unit to be handled.

In some embodiments of the present invention, after the target unit to be handled is determined according to the task information of the task to be executed, and the at least one candidate laneway in the stereoscopic warehouse, that conforms to the item attribute information is selected according to the item attribute information of the target unit to be handled, the at least one target storage floor is selected according to the distribution information of the at least one candidate laneway in the plurality of storage floors and the current floor information of the target unit to be handled.

In some examples, since the stereoscopic warehouse includes the plurality of storage floors, a floor including the candidate laneway may be selected from the plurality of storage floors, according to the distribution information of the at least one candidate laneway in the plurality of storage floors, and the floor including the candidate laneway may be taken as the target storage floor directly.

In some examples, the distribution information of the at least one candidate laneway in the plurality of storage floors and floor information where the target unit to be handled is currently located may be considered simultaneously to select the at least one target storage floor. That is, selecting the at least one target storage floor according to the distribution information of the at least one candidate laneway in the plurality of storage floors and the current floor information of the target unit to be handled may include determining the at least one candidate storage floor according to the distribution information of the at least one candidate laneway in the plurality of storage floors, acquiring the candidate floor information of the candidate storage floor, and determining the at least one target storage floor from the at least one candidate storage floor according to the current floor information and the candidate floor information.

Illustratively, the distribution information of the candidate laneway in the plurality of storage floors refers to a floor where the candidate laneway is located. After the floor where the candidate laneway is located is determined, the floor where the candidate laneway is located is determined as the candidate storage floor. For example, if a candidate laneway *a* is located on the 1^{st} floor, a candidate laneway *b* is located on the 3^{rd} floor and a candidate laneway *c* is located on the 4^{th} floor, a candidate storage floor of 1, a candidate storage floor of 3 and a candidate storage floor of 4 are determined. After the at least one candidate storage floor is determined, candidate floor information of the candidate storage floor may be acquired, including but not limited to a number, a name and the like of the candidate floor. A way to acquire the candidate floor information of the candidate storage floor may be to search for the candidate floor information of the candidate storage floor in a floor information base, and may also be to send a candidate floor information acquisition instruction to an operator to receive candidate floor information fed back by the operator.

In a practical application, after the current floor information of the target unit to be handled and the candidate floor information of the candidate storage floor are determined, there are many ways to determine the at least one target storage floor from the at least one candidate storage floor according to the current floor information and the candidate floor information, which may be selected according to an actual situation and is not limited in the embodiment of the present invention. In some embodiments, distance information between the target unit to be handled and the candidate storage floor may be determined according to the current floor information and the candidate floor information, and the at least one target storage floor may be selected from the candidate storage floor according to the distance information. In other embodiments, a preset floor threshold may be acquired, floor selection information may be determined according to the current floor information and the floor threshold, and the at least one target storage floor may be determined from the at least one candidate storage floor, according to the floor selection information and the candidate floor information.

For example, taking the preset floor threshold of 1 as an example, it represents that a maximum floor difference between the target storage floor and the current floor of the target unit to be handled is 1. Assuming that the current floor information is 3, the floor selection information is determined to be 2 and 4 according to the current floor information and the floor threshold. Assuming that the candidate floor information includes 1, 2, 3 and 5, the target storage floor is determined to be floor 2 according to the floor selection information and the candidate floor information.

By applying a solution of an embodiment of the present invention, the at least one candidate storage floor is determined according to the distribution information of the at least one candidate laneway in the plurality of storage floors, the candidate floor information of the candidate storage floor is acquired, and the at least one target storage floor is determined from the at least one candidate storage floor, according to the current floor information and the candidate floor information, thus achieving accurate determination of the target storage floor according to requirements of the task to be executed and providing customized handing scheduling.

In some embodiments, a numeric count of a task to be executed corresponding to each floor may also be considered to select the at least one target storage floor. That is, selecting the at least one target storage floor according to the distribution information of the at least one candidate laneway in the plurality of storage floors and the current floor information of the target unit to be handled may include determining at least one preliminary storage floor according to the distribution information of the at least one candidate laneway in the plurality of storage floors, determining a numeric count of a task to be executed of the at least one preliminary storage floor as a first determination factor, and determining a floor difference between the at least one preliminary storage floor and a current floor of the target unit to be handled as a second determination factor, determining at least one candidate storage floor according to the first determination factor and the second determination factor, and selecting the at least one target storage floor according to the at least one candidate storage floor.

Illustratively, according to the distribution information of the at least one candidate laneway in the plurality of storage floors, the storage floor including the candidate laneway is determined as a preliminary selected storage floor, namely the preliminary storage floor. After the preliminary storage floor is determined, a numeric count of a task to be executed corresponding to each preliminary storage floor and a distance between each preliminary storage floor and the current floor, that is, the floor difference, may be considered. The at least one preliminary storage floor is ranked according to the numeric count of the task to be executed and the floor difference, the at least one candidate storage floor is selected from ranked preliminary storage floors, and finally the at least one target storage floor is selected from the at least one candidate storage floor.

It is to be noted that if numeric counts of tasks to be executed corresponding to the preliminary storage floor is too large, waiting time in the preliminary storage floor may be too long. If the floor difference between the preliminary storage floor and the current floor is too large, a distance from the current floor to the preliminary storage floor may be too long, resulting in too low task execution efficiency.

Therefore, according to the first determination factor and the second determination factor, the at least one preliminary storage floor may be ranked, with a goal of minimizing the numeric counts of the tasks to be executed and minimizing the floor difference, and the at least one candidate storage floor may be selected according to a ranking result. Further, according to an actual demand, different weights may be set for the first determination factor and the second determination factor to determine the at least one candidate storage floor.

For example, numeric counts of tasks to be executed A of a preliminary storage floor A is 9 and a floor difference A is 3, numeric counts of tasks to be executed B of a preliminary storage floor B is 6 and a floor difference B is 5, and numeric counts of tasks to be executed C of a preliminary storage floor C is 3 and the floor difference A is 4. According to the numeric counts of the tasks to be executed A, a first determination factor A is determined to be 0.9 and the second determination factor A is determined to be 0.3. According to the numeric counts of the tasks to be executed B, a first determination factor B is determined to be 0.6 and the second determination factor B is determined to be 0.5. According to the numeric counts of the tasks to be executed C, a first determination factor C is determined to be 0.3 and the second determination factor C is determined to be 0.4. Assuming that a first weight corresponding to the first determination factor is 0.6, and a second weight corresponding to the second determination factor is 0.4. A value obtained by multiplying the first determination factor A by the first weight is added to a value obtained by multiplying the second determination factor A by the second weight, and an index A corresponding to the preliminary storage floor A is obtained to be 0.66. Similarly, an index B corresponding to the preliminary storage floor B is determined to be 0.56, and an index C corresponding to the preliminary storage floor C is determined to be 0.34. The preliminary storage floor B and the preliminary storage floor C are taken as candidate storage floors.

By applying a solution of an embodiment of the present invention, the at least one preliminary storage floor is determined according to the distribution information of the at least one candidate laneway in the plurality of storage floors, the numeric count of the task to be executed of the at least one preliminary storage floor is determined as the first determination factor, the floor difference between the at least one preliminary storage floor and the current floor of the target unit to be handled is determined as the second determination factor, the at least one candidate storage floor is determined according to the first determination factor and the second determination factor, and the at least one target storage floor is selected according to the at least one candidate storage floor, so that tasks among individual storage floors are more balanced, thus further improving the efficiency of task execution.

In step 208, a target storage location in the at least one target storage floor is determined according to current location information of the target unit to be handled and storage location information of a candidate laneway in the at least one target storage floor.

In one or more embodiments of the present invention, after the target unit to be handled is determined according to the task information of the task to be executed, the at least one candidate laneway in the stereoscopic warehouse, that conforms to the item attribute information is selected according to the item attribute information of the target unit to be handled, and the at least one target storage floor is selected according to the distribution information of the at least one candidate laneway in the plurality of storage floors and the current floor information of the target unit to be handled, the target storage location in the at least one target storage floor is determined according to the current location information of the target unit to be handled and the storage location information of the candidate laneway in the at least one target storage floor.

The current location information of the target unit to be handled is a location where the target unit to be handled is located. In an embodiment of the present invention, the current location information of the target unit to be handled may also be understood as starting location information of the target unit to be handled.

In some examples, at least one unobstructed available storage location may be determined according to the storage location information of the candidate laneway in the at least one target storage floor, distance information between the target unit to be handled and the unobstructed available storage location may be determined according to the current location information of the target unit to be handled and the storage location information of the unobstructed available storage location, and an unobstructed available storage location with smallest distance information may be determined as the target storage location.

In other examples, after the distance information between the target unit to be handled and the unobstructed available storage location is determined, a location index of the candidate laneway may be determined, and the target storage location may be determined according to the location index. That is, determining the target storage location in at least one target storage floor according to the current location information of the target unit to be handled and the storage location information of the candidate laneway in the at least one target storage floor may include determining at least one unobstructed available storage location according to the storage location information of the candidate laneway in the at least one target storage floor, determining distance information between the target unit to be handled and the unobstructed available storage location according to the current location information of the target unit to be handled and the storage location information of the unobstructed available storage location, determining a location index of the candidate laneway in the at least one target storage floor according to the distance information, and determining the target storage location in the at least one target storage floor according to the location index.

In a practical application, after the at least one unobstructed available storage location is determined, the distance information between the target unit to be handled and the unobstructed available storage location may be calculated according to the current location information of the target unit to be handled and the location information of the unobstructed available storage location. A way to calculate the distance information includes, but is not limited to an A* algorithm, which may be selected according to an actual situation and is not limited in the embodiment of the present invention. After the distance information is determined, the minimum distance information is determined as the location index of the candidate laneway in the target storage floor, and the target storage location in the at least one target storage floor is determined according to the location index.

By applying a solution of an embodiment of the present invention, the at least one unobstructed available storage location is determined according to the storage location information of the candidate laneway in the at least one target storage floor, the distance information between the target unit to be handled and the unobstructed available storage location is determined according to the current location information of the target unit to be handled and the storage location information of the unobstructed available storage location, the location index of the candidate laneway in the at least one target storage floor is determined according to the distance information, and the target storage location in the at least one target storage floor is determined according to the location index, thus improving the rationality of the target storage location, planning the storage locations rationally, improving the utilization rate of the storage locations and the efficiency of handing scheduling, and improving the accuracy of distance information by using the A* algorithm.

In a possible implementation of the present invention, the at least one target laneway may be determined from the candidate laneways in the target storage floor, according to the location index of the candidate laneway, and the target storage location may be selected in the target laneway. That is, determining the target storage location in the at least one target storage floor according to the location index may include determining at least one target laneway from the at least one target storage floor according to the location index, and determining the target storage location according to depth information of the unobstructed available storage location in the at least one target laneway.

In a practical application, there are many ways to determine the at least one target laneway from the at least one target storage floor according to the location index. In some embodiments of the present invention, the location indexes of the candidate laneway in the target storage floor may be ranked in an ascending order, and the candidate laneway with a smallest location index may be determined as the target laneway. In other embodiments of the present invention, a preset index threshold may be acquired, and the at least one target laneway may be selected from candidate laneways according to the index threshold.

Further, after the at least one target lane is determined, the target storage location may be determined according to the depth information of the unobstructed available storage location in the at least one target laneway.

By applying a solution of an embodiment of the present invention, according to the location index, the at least one target laneway is determined from the at least one target storage floor, and the target storage location is determined according to the depth information of the unobstructed available storage location in the at least one target laneway, thus improving the rationality of the target storage location, planning the storage location rationally, and improving the utilization rate of the storage location and the efficiency of handing scheduling.

It is to be noted that there are many ways to determine the target storage location according to the depth information of the unobstructed available storage location in the at least one target laneway. In some embodiments, determining the target storage location according to the depth information of the unobstructed available storage location in the at least one target laneway may include determining the target storage location from the unobstructed available storage location of the at least one target laneway according to a determination rule of a descending order of the depth information.

Illustratively, as an example, assuming that depth information A of an unobstructed available storage location A in the target laneway is 2, depth information B of an unobstructed available storage location B in the target laneway is 6, and depth information C of an unobstructed available storage location C in the target laneway is 4, the depth information A, the depth information B and the depth information C are ranked in a descending order. It is determined that an unobstructed available storage location with largest depth information is the unobstructed available storage location B, and the unobstructed available storage location B is determined as the target storage location.

By applying a solution of an embodiment of the present invention, the target storage location is determined from the unobstructed available storage location of the at least one target laneway, according to the determination rule of the descending order of the depth information, so that in a process of handing scheduling, the target unit to be handled may be stored at the storage location with a large depth, thus improving the utilization rate of the storage location in the stereoscopic warehouse, facilitating next handing scheduling, and further improving the efficiency of handing scheduling.

In another possible implementation of the present invention, if the target laneway has a plurality of entrances, a depth of the unobstructed available storage location from each exit may be determined, and a maximum depth may be determined as the depth information of the unobstructed available storage location in the laneway.

In step 210, a handling device is scheduled to handle the target unit to be handled to the target storage location for storage.

In some embodiments, after the target storage location in the at least one target storage floor is determined according to the current location information of the target unit to be handled and the storage location information of the candidate laneway in the at least one target storage floor, the handling device may be scheduled to handle the target unit to be handled to the target storage location for storage. It is to be noted that the handling device may also be understood as a transportation device, including but not limited to a four-way shuttle vehicle, an autonomous mobile robot, an automatic lifting type transportation device separated from a shelf, etc., which may be selected according to an actual situation and is not limited in the embodiment of the present invention.

By applying a solution of an embodiment of the present invention, the candidate laneway is selected, the target storage floor is further selected according to the candidate laneway, and finally the target storage location in the target floor is determined, so that the storage location is planned reasonably, and the utilization rate of the storage location and the efficiency of handing scheduling are improved.

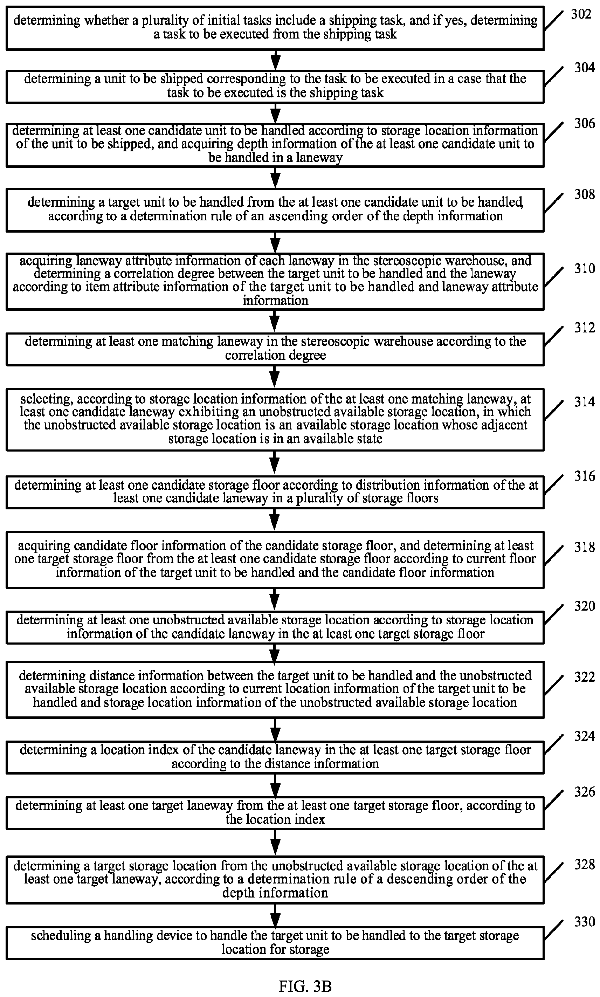

In conjunction with FIG. 3B, taking an application of a handling scheduling method for a stereoscopic warehouse provided in the present invention in the field of warehousing and logistics as an example, the handling scheduling method for the stereoscopic warehouse will be further described below. FIG. 3B is a flow chart showing a handling scheduling method for a stereoscopic warehouse applied in the field of warehousing and logistics provided in some embodiments of the present invention, and the method includes steps as follows.

In step 302, it is determined whether a plurality of initial tasks include a shipping task, and if yes, a task to be executed is determined from the shipping task.

In step 304, in a case that the task to be executed is the shipping task, a unit to be shipped corresponding to the task to be executed is determined.

In step 306, at least one candidate unit to be handled is determined according to storage location information of the unit to be shipped, and depth information of the at least one candidate unit to be handled in a laneway is acquired.

Illustratively, taking a laneway with a single exit and entrance as an example, the at least one candidate unit to be handled is a unit to be handled that blocks the unit to be shipped from being shipped, so it needs to handle the at least one candidate unit to be handled before the unit to be shipped is shipped. When the at least one candidate unit to be handled is handled, a candidate unit to be handled with a small depth may be handled first, and then a candidate unit to be handled with a large depth may be handled, according to the depth information of the at least one candidate unit to be handled in the laneway.

In step 308, a target unit to be handled is determined from the at least one candidate unit to be handled, according to a determination rule of an ascending order of the depth information.

In step 310, laneway attribute information of each laneway in the stereoscopic warehouse is acquired, and a correlation degree between the target unit to be handled and the laneway is determined according to item attribute information of the target unit to be handled and laneway attribute information.

In step 312, according to the correlation degree, at least one matching laneway is determined in the stereoscopic warehouse.

In step 314, according to storage location information of the at least one matching laneway, at least one candidate laneway exhibiting an unobstructed available storage location is selected. The unobstructed available storage location is an available storage location whose adjacent storage location is in an available state.

In step 316, at least one candidate storage floor is determined according to distribution information of the at least one candidate laneway in a plurality of storage floors.

In step 318, candidate floor information of the candidate storage floor is acquired, and at least one target storage floor is determined from the at least one candidate storage floor, according to current floor information of the target unit to be handled and the candidate floor information.

In step 320, at least one unobstructed available storage location is determined according to storage location information of the candidate laneway in the at least one target storage floor.

In step 322, distance information between the target unit to be handled and the unobstructed available storage location is determined according to current location information of the target unit to be handled and storage location information of the unobstructed available storage location.

In step 324, a location index of the candidate laneway in the at least one target storage floor is determined according to the distance information.

In step 326, at least one target laneway is determined from the at least one target storage floor, according to the location index.

In step 328, a target storage location is determined from the unobstructed available storage location of the at least one target laneway, according to a determination rule of a descending order of the depth information.

In step 330, a handling device is scheduled to handle the target unit to be handled to the target storage location for storage.

It is to be noted that the implementation of steps 302 to 330 is the same as the implementation of the handing scheduling method for the stereoscopic warehouse provided in FIG. 2 above, which will not be elaborated in the embodiment of the present invention.

By applying a solution of an embodiment of the present invention, a target unit to be handled is determined according to task information of a task to be executed, at least one candidate laneway, in a stereoscopic warehouse, that conforms to item attribute information is selected according to the item attribute information of the target unit to be handled, at least one target storage floor is selected according to distribution information of the at least one candidate laneway in the plurality of storage floors and current floor information of the target unit to be handled, a target storage location in the at least one target storage floor is determined according to current location information of the target unit to be handled and storage location information of a candidate laneway in the at least one target storage floor, and a handling device is scheduled to handle the target unit to be handled to the target storage location for storage. The candidate laneway is selected, the target storage floor is further selected according to the candidate laneway, and finally the target storage location in the target floor is determined, thus planning the storage location reasonably, and improving the utilization rate of the storage location and the efficiency of handing scheduling.

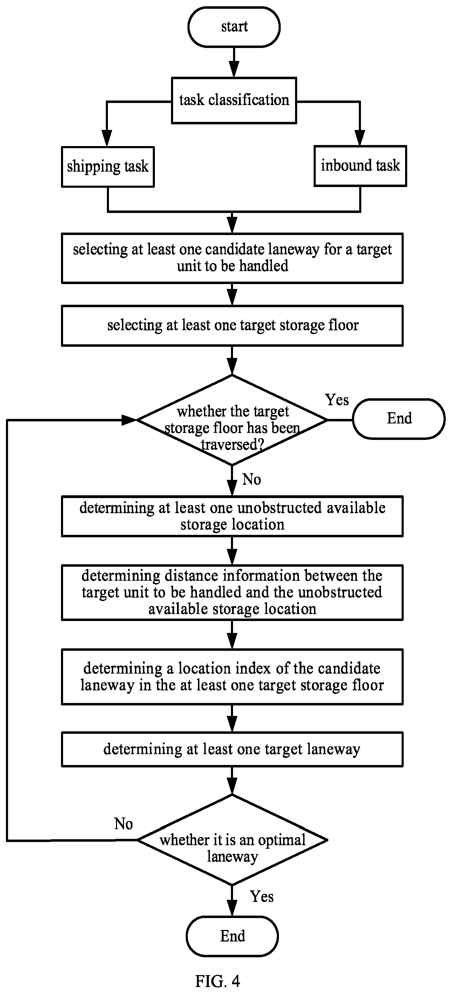

FIG. 4 is a flow chart showing determination of a target storage location in a handling scheduling method for a stereoscopic warehouse according to some embodiments of the present invention.

A server-side starts to process an initial task, classifies a plurality of initial tasks, and divides the plurality of initial tasks into a shipping task and an inbound task. In a process of handing scheduling, a unit to be handled may be divided into a blocking unit to be handled and an inbound unit to be handled, and the blocking unit to be handled is a unit to be handled that blocks a unit to be shipped from being shipped. In an actual processing process, the shipping task takes precedence over the inbound task. For the target unit to be handled, at least one candidate laneway, in the stereoscopic warehouse, that conforms to the item attribute information may be selected according to the item attribute information of the target unit to be handled. The candidate laneway exhibits an unobstructed available storage location. After the at least one candidate laneway is determined, at least one target storage floor may be selected according to distribution information of the at least one candidate laneway in the plurality of storage floors and current floor information of the target unit to be handled, and a target storage location is determined in the at least one target storage floor. In a practical application, it needs to determine whether the target storage floor has been traversed, if yes, the target storage location is determined, and the handling device is scheduled to handle the target unit to be handle to the target storage location for storage, and the handling scheduling ends. If not, the target storage location is determined in the target storage floor that has not been traversed.

Illustratively, when the target storage location is determined, at least one unobstructed available storage location may be determined according to the storage location information of the candidate laneway in the at least one target storage floor, then distance information between the target unit to be handled and the unobstructed available storage location may be determined according to current location information of the target unit to be handled and storage location information of unobstructed available storage location, a location index of the candidate laneway in the at least one target storage floor is determined according to the distance information, and at least one target laneway is determined according to the location index. It is determined whether at least one target laneway is an optimal laneway, and if not, it is returned to determine whether the target storage floor has been traversed. If yes, the target storage location in the target laneway is determined, the handling device is scheduled to handle the target unit to be handled to the target storage location for storage, and the handling scheduling ends.

By applying a solution of an embodiment of the present invention, for the blocking unit to be handled, a priority of the blocking unit to be handled is determined according to a location of the blocking unit to be handled in the warehouse, so as to avoid being stuck during execution of handling tasks, and items with high attribute similarity are stored in a unified laneway, so that the waste of storage location is reduced, the storage location are planned rationally, and the utilization rate of storage location and the efficiency of handing scheduling are improved.

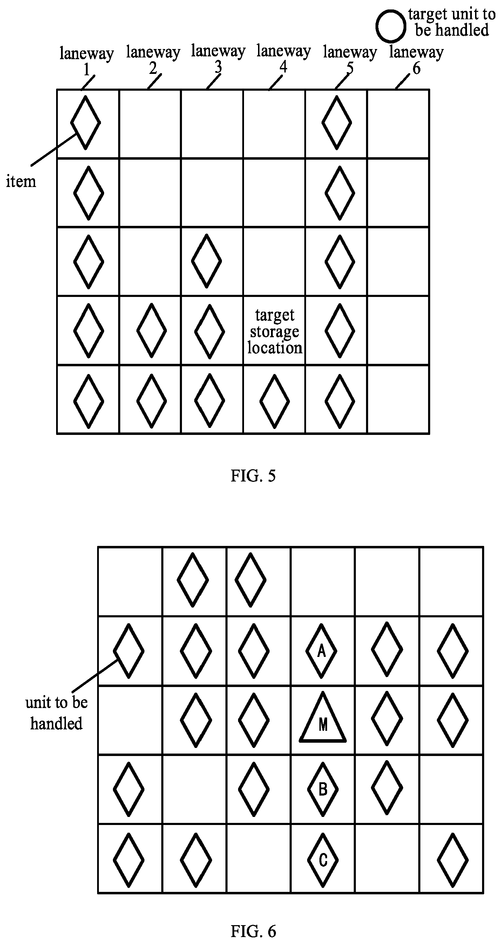

FIG. 5 is a schematic diagram showing a target storage floor in a stereoscopic warehouse according to some embodiments of the present invention. A candidate laneway, in the stereoscopic warehouse, that conforms to the item attribute information is selected according to item attribute information of the target unit to be handled, and the candidate laneway includes a laneway 2, a laneway 4, a laneway 11 and a laneway 22. According to distribution information of the candidate laneway in the plurality of storage floors in the stereoscopic warehouse and current floor information of the target unit to be handled, the target storage floor is selected to be floor 1. As shown in FIG. 5, the target storage floor includes 6 laneways, which are a laneway 1, a laneway 2, a laneway 3, a laneway 4, a laneway 5 and a laneway 6, respectively. All five storage locations in the laneway 1 have items, two storage locations in the laneway 2 have items, three storage locations in the laneway 3 have items, one storage location in the laneway 4 has an item, five storage locations in the laneway 5 have items, and no item exists in the laneway 6. Referring to FIG. 5, the target unit to be handled is represented by a circle. According to the current location information of the target unit to be handled and the storage location information of the laneways 2 and 4 in the target storage floor of floor 1, the fourth storage location in the laneway 4 is determined as the target storage location.

FIG. 6 is a schematic diagram showing a storage floor in another stereoscopic warehouse according to some embodiments of the present invention. As an example, assuming that the task to be executed is a shipping task, it is determined that the unit to be shipped corresponding to the task to be executed is a unit to be shipped M, and each laneway in the stereoscopic warehouse has only one upper entrance and exit, it is determined that a laneway where the unit to be shipped M is located includes a unit to be handled A, a unit to be handled B and a unit to be handled C, according to the storage location information of the unit to be shipped M. Depth information of the unit to be shipped M is acquired to be 3, depth information of the unit to be handled A is acquired to be 2, depth information of the unit to be handled B is acquired to be 4, and depth information of the unit to be handled C is acquired to be 5. A unit to be handled whose depth information is less than the depth information of the unit to be shipped M may be determined as the candidate unit to be handled. Therefore, the unit to be handled A among the unit to be handled A, the unit to be handled B and the unit to be handled C may be determined as the candidate unit to be handled.

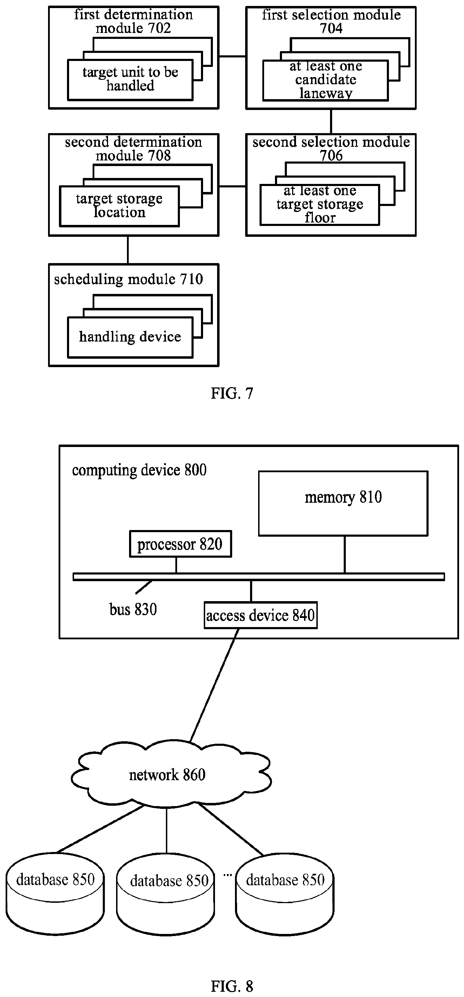

Corresponding to the above-mentioned method embodiments, the present invention also provides an embodiment of a handling scheduling apparatus for a stereoscopic warehouse. FIG. 7 is a schematic diagram showing a handling scheduling apparatus for a stereoscopic warehouse according to some embodiments of the present invention. As shown in FIG. 7, the apparatus includes a first determination module 702, a first selection module 704, a second selection module 706, a second determination module 708, and a scheduling module 710.

The first determination module 702 is configured to determine a target unit to be handled according to task information of a task to be executed.

The first selection module 704 is configured to select, according to item attribute information of the target unit to be handled, at least one candidate laneway, in the stereoscopic warehouse, that conforms to the item attribute information.

The second selection module 706 is configured to select at least one target storage floor from a plurality of storage floors according to distribution information of the at least one candidate laneway in the plurality of storage floors and current floor information of the target unit to be handled.

The second determination module 708 is configured to determine a target storage location in the at least one target storage floor according to the current location information of the target unit to be handled and the storage location information of a candidate laneway in the at least one target storage floor.

The scheduling module 710 is configured to schedule a handling device to handle the target unit to be handled to the target storage location for storage.

In some embodiments, the handling scheduling apparatus further includes a determination module configured to determine whether a plurality of initial tasks include a shipping task. In a case that the plurality of initial tasks include the shipping task, the task to be executed is determined from the shipping task.

In some embodiments, the first determination module 702 is configured to determine a unit to be shipped corresponding to the task to be executed in a case that the task to be executed is a shipping task, determine at least one candidate unit to be handled according to storage location information of the unit to be shipped, and determine the target unit to be handled according to the at least one candidate unit to be handled. The unit to be shipped is a unit to be handled corresponding to the task to be executed and waiting to be shipped, and the candidate unit to be handled is a unit to be handled that blocks the unit to be shipped from being shipped.

In some embodiments, the first determination module 702 is configured to determine the target unit to be handled from the at least one candidate unit to be handled according to depth information of the at least one candidate unit to be handled in a laneway. Illustratively, the first determination module 702 may be configured to determine the target unit to be handled from the at least one candidate unit to be handled according to the depth information of the at least one candidate unit to be handled in the laneway and according to a determination rule of an ascending order of the depth information.

In other embodiments, the first determination module 702 is configured to determine, according to the storage location information of the unit to be shipped, a shipping route corresponding to each handling direction of at least one handling direction and determine a candidate unit to be handled corresponding to each shipping route, determine a target shipping route from at least one shipping route according to a numeric count and/or depth information of the candidate unit to be handled corresponding to each shipping route, and determine the target unit to be handled according to at least one candidate unit to be handled corresponding to the target shipping route.

Illustratively, if numeric counts of candidate units to be handled corresponding to individual shipping routes are different, a shipping route with a smallest numeric count of the candidate unit to be handled is determined as the target shipping route. If a plurality of shipping routes of the at least one shipping route have the smallest numeric count of the candidate unit to be handled, the target shipping route is determined among the plurality of shipping routes, according to depth information of candidate units to be handled corresponding to the plurality of shipping routes. For example, total depth information of each shipping route among the plurality of shipping routes may be determined according to the depth information of the candidate units to be handled corresponding to the plurality of shipping routes, and a shipping route, among the plurality of shipping routes, with smallest total depth information is determined as the target shipping route.

Illustratively, the first determination module 702 is configured to determine the target unit to be handled from the at least one candidate unit to be handled according to depth information of the at least one candidate unit to be handled corresponding to the target shipping route in a laneway and according to a determination rule of an ascending order of the depth information.

In some embodiments, the first selection module 704 is configured to determine at least one matching laneway in the stereoscopic warehouse, according to the item attribute information of the target unit to be handled, and select at least one candidate laneway exhibiting an unobstructed available storage location according to storage location information of the at least one matching laneway. The unobstructed available storage location is an available storage location in which storage locations from an entrance of the laneway to the unobstructed storage location are all in an available state.

In some embodiments, the first selection module 704 is configured to acquire laneway attribute information of each laneway in the stereoscopic warehouse, determine a correlation degree between the target unit to be handled and the laneway according to the item attribute information and the laneway attribute information, and determining the at least one matching laneway in the stereoscopic warehouse according to the correlation degree.

In some embodiments, the second selection module 706 is configured to determine at least one candidate storage floor according to the distribution information of the at least one candidate laneway in the plurality of storage floors, acquire candidate floor information of the candidate storage floor, and determine the at least one target storage floor from the at least one candidate storage floor, according to the current floor information and the candidate floor information.

In some embodiments, the second selection module 706 is further configured to determine at least one preliminary storage floor according to the distribution information of the at least one candidate laneway in the plurality of storage floors, determine a numeric count of a task to be executed of the at least one preliminary storage floor as a first determination factor, and determine a floor difference between the at least one preliminary storage floor and a current floor of the target unit to be handled as a second determination factor, determine at least one candidate storage floor according to the first determination factor and the second determination factor, and determine the at least one target storage floor according to the at least one candidate storage floor.

In some embodiments, the second determination module 708 is configured to determine at least one unobstructed available storage location according to the storage location information of the candidate laneway in the at least one target storage floor, determine distance information between the target unit to be handled and the unobstructed available storage location according to the current location information of the target unit to be handled and the storage location information of the unobstructed available storage location, and determine an unobstructed available storage location with smallest distance information as the target storage location.

In some embodiments, the second determination module 708 is configured to determine at least one unobstructed available storage location according to the storage location information of the candidate laneway in the at least one target storage floor, determine distance information between the target unit to be handled and the unobstructed available storage location according to the current location information of the target unit to be handled and storage location information of the unobstructed available storage location, determine a location index of the candidate laneway in the at least one target storage floor according to the information of the distance, and determine the target storage location in the at least one target storage floor according to the location index.

In some embodiments, the second determination module 708 is further configured to determine at least one target laneway from the at least one target storage floor according to the location index, and determine the target storage location according to depth information of the unobstructed available storage location in the at least one target laneway.

In some embodiments, the second determination module 708 is further configured to determine the target storage location from the unobstructed available storage location of the at least one target laneway according to a determination rule of a descending order of the depth information.

By applying a solution of an embodiment of the present invention, a target unit to be handled is determined according to task information of a task to be executed, at least one candidate laneway, in the stereoscopic warehouse, that conforms to the item attribute information is selected according to item attribute information of the target unit to be handled, at least one target storage floor is selected according to distribution information of the at least one candidate laneway in a plurality of storage floors and current floor information of the target unit to be handled, a target storage location in the at least one target storage floor is determined according to current location information of the target unit to be handled and storage location information of a candidate laneway in the at least one target storage floor, and a handling device is scheduled to handle the target unit to be handled to the target storage location for storage. The candidate laneway is selected, the target storage floor is further selected according to the candidate laneway, and finally the target storage location in the target floor is determined, thus planning the storage location reasonably, and improving the utilization rate of the storage location and the efficiency of handing scheduling.

The above is a schematic solution of the handling scheduling apparatus for the stereoscopic warehouse in the embodiment of the present invention. It is to be noted that the technical solution of the handling scheduling apparatus for the stereoscopic warehouse and the technical solution of the above-mentioned handling scheduling method for the stereoscopic warehouse belong to the same concept, and details not described in detail in the technical solution of the handling scheduling apparatus for the stereoscopic warehouse may be referred to the description of the technical solution of the above-mentioned handling scheduling method for the stereoscopic warehouse.

FIG. 8 is a block diagram showing a computing device according to some embodiments of the present invention. Components of a computing device 800 include, but are not limited to a memory 810 and a processor 820. The processor 820 is connected to the memory 810 via a bus 830, and a database 850 is configured to store data.

The computing device 800 also includes an access device 840 that enables the computing device 800 to communicate via one or more networks 860. Examples of these networks include a public switched telephone network (PSTN), a local area network (LAN), a wide area network (WAN), a personal area network (PAN) or a combination of communication networks such as Internet. The access device 840 may include one or more of any type of wired or wireless network interface (e.g., a network interface card (NIC)), such as an IEEE802.11 wireless local area network (WLAN) a wireless interface, a world interoperability for microwave access (Wi-MAX) interface, an Ethernet interface, a universal serial bus (USB) interface, a cellular network interface, a Bluetooth interface, a near field communication (NFC) interface, and so on.

In some embodiments, the above components of the computing device 800 and other components not shown in FIG. 8 may also be connected to each other, for example, via a bus. It is to be understood that the block diagram of the computing device shown in FIG. 8 is only for illustrative purposes, and is not intended to limit the scope of the present invention. Those skilled in the art may add or replace other components as needed.

The computing device 800 may be any type of stationary or mobile computing device, including a mobile computer or a mobile computing device (e.g., a tablet computer, a personal digital assistant, a laptop computer, a notebook computer, a netbook, etc.), a mobile phone (e.g., a smart phone), a wearable computing device (e.g., a smart watch, a smart glass, etc.) or other types of mobile devices, or a stationary computing device such as a desktop computer or a personal computer (PC). The computing device 800 may also be a mobile or stationary server.

The processor 820 is configured to execute the following computer-executable instructions: determining a target unit to be handled according to task information of a task to be executed, selecting, according to item attribute information of the target unit to be handled, at least one candidate laneway, in a stereoscopic warehouse, that conforms to the item attribute information, selecting at least one target storage floor according to distribution information of the at least one candidate laneway in the plurality of storage floors and current floor information of the target unit to be handled, determining a target storage location in the at least one target storage floor according to current location information of the target unit to be handled and storage location information of a candidate laneway in the at least one target storage floor, and scheduling a handling device to handle the target unit to be handled to the target storage location for storage.

The above is a schematic solution of the computing device of an embodiment of the present invention. It is to be noted that the technical solution of the computing device and the technical solution of the above-mentioned handling scheduling method for the stereoscopic warehouse belong to the same concept, and details not described in detail in the technical solution of the computing device may be referred to the description of the technical solution of the above-mentioned handling scheduling method for the stereoscopic warehouse.

Some embodiments of the present invention further provide a computer-readable storage medium having stored therein computer instructions that, when executed by a processor, cause the processor to determine a target unit to be handled according to task information of a task to be executed, select, according to item attribute information of the target unit to be handled, at least one candidate laneway, in a stereoscopic warehouse, that conforms to the item attribute information, select at least one target storage floor according to distribution information of the at least one candidate laneway in the plurality of storage floors and current floor information of the target unit to be handled, determine a target storage location in the at least one target storage floor according to current location information of the target unit to be handled and storage location information of a candidate laneway in the at least one target storage floor, and schedule a handling device to handle the target unit to be handled to the target storage location for storage.

The above is a schematic solution of the computer-readable storage medium of an embodiment of the present invention. It is to be noted that the technical solution of the storage medium and the technical solution of the above-mentioned handling scheduling method for the stereoscopic warehouse belong to the same concept, and details not described in detail in the technical solution of the storage medium may be referred to the description of the technical solution of the above-mentioned handling scheduling method for the stereoscopic warehouse.

Specific embodiments of the present invention have been described above. Other embodiments are within the scope of the appended claims. In some cases, actions or steps recited in the claims may be performed in an order different from that in the embodiments and may still achieve desired results. In addition, processes depicted in the drawings do not necessarily require a specific order or a sequential order shown to achieve the desired results. In some embodiments, multitasking and parallel processing are also possible or may be advantageous.

The computer instructions include computer program code. The computer program code may be in a source code form, an object code form, an executable file or some intermediate forms, etc. The computer-readable medium may include any entity or device capable of carrying the computer program code, a recording medium, a USB flash drive, a mobile hard disk, a magnetic disk, an optical disk, a computer memory, a read-only memory (ROM), a random access memory (RAM), an electric carrier signal, a telecommunication signal, a software distribution medium, etc.

It is to be noted that for the sake of simplicity of description, the above-mentioned method embodiments are all described as a series of action combinations, but those skilled in the art should know that the present invention is not limited by a described order of actions, because some steps may be performed in other orders or simultaneously according to the present invention. Secondly, those skilled in the art should also know that the embodiments described herein are all preferred embodiments, and actions and modules involved are not necessarily required by the present invention.

In the above-mentioned embodiments, the description of each embodiment has its own emphasis. For parts that are not described in detail in a certain embodiment, reference may be made to relevant descriptions of other embodiments.

Some embodiments of the present invention disclosed above are only used to help illustrate the present invention. The above-mentioned embodiments do not describe all the details in detail, nor do they limited the present invention to the embodiments described. Obviously, many modifications and changes may be made according to the contents of the present invention. The present invention selects and describes these embodiments in order to better explain the principle and practical application of the present invention, so that those skilled in the art may understand and utilize the present invention well. The present invention is limited only by the claims and their full scope and equivalents.

## Claims

1. A handling scheduling method for a stereoscopic warehouse, the stereoscopic warehouse comprising a plurality of storage floors, and the plurality of storage floors each comprising a plurality of laneways, the method comprising:
determining a target unit to be handled according to task information of a task to be executed;
selecting, according to item attribute information of the target unit to be handled, at least one candidate laneway in the stereoscopic warehouse, wherein the at least one candidate laneway conforms to the item attribute information;
selecting at least one target storage floor from the plurality of storage floors according to distribution information of the at least one candidate laneway in the plurality of storage floors and current floor information of the target unit to be handled;
determining a target storage location in the at least one target storage floor according to current location information of the target unit to be handled and storage location information of a candidate laneway in the at least one target storage floor; and
scheduling a handling device to handle the target unit to be handled to the target storage location for storage.

2. The method of claim 1, wherein before determining the target unit to be handled according to the task information of the task to be executed, the method further comprises:
determining the task to be executed from a shipping task in a case that a plurality of initial tasks comprise the shipping task.

3. The method of claim 1, wherein determining the target unit to be handled according to the task information of the task to be executed comprises:
determining a unit to be shipped corresponding to the task to be executed in a case that the task to be executed is a shipping task, wherein the unit to be shipped is a unit to be handled corresponding to the task to be executed and waiting to be shipped; and
determining at least one candidate unit to be handled according to storage location information of the unit to be shipped, and determining the target unit to be handled according to the at least one candidate unit to be handled, wherein the candidate unit to be handled is a unit to be handled that blocks the unit to be shipped from being shipped.

4. The method of claim 3, wherein determining the target unit to be handled according to the at least one candidate unit to be handled comprises:
determining the target unit to be handled from the at least one candidate unit to be handled according to depth information of the at least one candidate unit to be handled in a laneway.

5. The method of claim 4, wherein determining the target unit to be handled from the at least one candidate unit to be handled according to the depth information of the at least one candidate unit to be handled in the laneway comprises:
determining the target unit to be handled from the at least one candidate unit to be handled according to the depth information of the at least one candidate unit to be handled in the laneway and according to a determination rule of an ascending order of the depth information.

6. The method of claim 3, wherein determining at least one candidate unit to be handled according to the storage location information of the unit to be shipped, and determining the target unit to be handled according to the at least one candidate unit to be handled comprises:
determining, according to the storage location information of the unit to be shipped, a shipping route corresponding to each handling direction of at least one handling direction, and determining a candidate unit to be handled corresponding to each shipping route;
determining a target shipping route from at least one shipping route according to a numeric count and/or depth information of the candidate unit to be handled corresponding to each shipping route; and
determining the target unit to be handled according to at least one candidate unit to be handled corresponding to the target shipping route.

7. The method of claim 6, wherein determining the target shipping route from the at least one shipping route according to the numeric count and/or the depth information of the candidate unit to be handled corresponding to each shipping route comprises:
determining a shipping route with a smallest numeric count of the candidate unit to be handled as the target shipping route, if numeric counts of candidate units to be handled corresponding to individual shipping routes are different; and
determining the target shipping route among a plurality of shipping routes according to depth information of candidate units to be handled corresponding to the plurality of shipping routes, if the plurality of shipping routes of the at least one shipping route have the smallest numeric count of the candidate unit to be handled.

8. The method of claim 7, wherein determining the target shipping route among the plurality of shipping routes according to the depth information of the candidate units to be handled corresponding to the plurality of shipping routes comprises:
determining total depth information of each shipping route among the plurality of shipping routes according to the depth information of the candidate units to be handled corresponding to the plurality of shipping routes; and
determining a shipping route, among the plurality of shipping routes, with smallest total depth information as the target shipping route.

9. The method of claim 6, wherein determining the target unit to be handled according to at least one candidate unit to be handled corresponding to the target shipping route comprises:
determining the target unit to be handled from the at least one candidate unit to be handled according to depth information of the at least one candidate unit to be handled corresponding to the target shipping route in a laneway and according to a determination rule of an ascending order of the depth information.

10. The method of any one of claims 1 to 9, wherein selecting, according to the item attribute information of the target unit to be handled, the at least one candidate laneway, in the stereoscopic warehouse, that conforms to the item attribute information comprises:
determining at least one matching laneway in the stereoscopic warehouse according to the item attribute information of the target unit to be handled; and
selecting at least one candidate laneway exhibiting an unobstructed available storage location according to storage location information of the at least one matching laneway, wherein the unobstructed available storage location is an available storage location in which storage locations from an entrance of the laneway to the unobstructed available storage location are all in an available state.

11. The method of claim 10, wherein determining the at least one matching laneway in the stereoscopic warehouse according to the item attribute information of the target unit to be handled comprises:
acquiring laneway attribute information of each laneway in the stereoscopic warehouse;
determining a correlation degree between the target unit to be handled and the laneway according to the item attribute information and the laneway attribute information; and
determining the at least one matching laneway in the stereoscopic warehouse according to the correlation degree.

12. The method of any one of claims 1 to 9, wherein selecting the at least one target storage floor from the plurality of storage floors according to the distribution information of the at least one candidate laneway in the plurality of storage floors and the current floor information of the target unit to be handled comprises:
determining at least one candidate storage floor according to the distribution information of the at least one candidate laneway in the plurality of storage floors;
acquiring candidate floor information of the candidate storage floor; and
determining the at least one target storage floor from the at least one candidate storage floor according to the current floor information and the candidate floor information.

13. The method of any one of claims 1 to 9, wherein selecting the at least one target storage floor from the plurality of storage floors according to the distribution information of the at least one candidate laneway in the plurality of storage floors and the current floor information of the target unit to be handled comprises:
determining at least one preliminary storage floor according to the distribution information of the at least one candidate laneway in the plurality of storage floors;
determining a numeric count of a task to be executed of the at least one preliminary storage floor as a first determination factor, and determining a floor difference between the at least one preliminary storage floor and a current floor of the target unit to be handled as a second determination factor;
determining at least one candidate storage floor according to the first determination factor and the second determination factor; and
determining the at least one target storage floor according to the at least one candidate storage floor.

14. The method of any one of claims 1 to 9, wherein determining the target storage location in the at least one target storage floor according to the current location information of the target unit to be handled and the storage location information of the candidate laneway in the at least one target storage floor comprises:
determining at least one unobstructed available storage location according to the storage location information of the candidate laneway in the at least one target storage floor;
determining distance information between the target unit to be handled and the unobstructed available storage location according to the current location information of the target unit to be handled and the storage location information of the unobstructed available storage location; and
determining an unobstructed available storage location with smallest distance information as the target storage location.

15. The method of any one of claims 1 to 9, wherein determining the target storage location in the at least one target storage floor according to the current location information of the target unit to be handled and the storage location information of the candidate laneway in the at least one target storage floor comprises:
determining at least one unobstructed available storage location according to the storage location information of the candidate laneway in the at least one target storage floor;
determining distance information between the target unit to be handled and the unobstructed available storage location according to the current location information of the target unit to be handled and storage location information of the unobstructed available storage location;
determining a location index of the candidate laneway in the at least one target storage floor according to the distance information; and
determining the target storage location in the at least one target storage floor according to the location index.

16. The method of claim 15, wherein determining the target storage location in the at least one target storage floor according to the location index comprises:
determining at least one target laneway from the at least one target storage floor according to the location index; and
determining the target storage location according to depth information of the unobstructed available storage location in the at least one target laneway.

17. The method of claim 16, wherein determining the target storage location according to the depth information of the unobstructed available storage location in the at least one target laneway comprises:
determining the target storage location from the unobstructed available storage location of the at least one target laneway according to a determination rule of a descending order of the depth information.

18. A handling scheduling apparatus for a stereoscopic warehouse, the stereoscopic warehouse comprising a plurality of storage floors, and the plurality of storage floors each comprising a plurality of laneways, the apparatus comprising:
a first determination module configured to determine a target unit to be handled according to task information of a task to be executed;
a first selection module configured to select, according to item attribute information of the target unit to be handled, at least one candidate laneway in the stereoscopic warehouse, wherein the at least one candidate laneway conforms to the item attribute information;
a second selection module configured to select at least one target storage floor from the plurality of storage floors according to distribution information of the at least one candidate laneway in the plurality of storage floors and current floor information of the target unit to be handled;
a second determination module configured to determine a target storage location in the at least one target storage floor according to the current location information of the target unit to be handled and the storage location information of a candidate laneway in the at least one target storage floor; and
a scheduling module configured to schedule a handling device to handle the target unit to be handled to the target storage location for storage.

19. A computing device, comprising:
a memory; and
a processor;
wherein the memory is configured to store therein computer-executable instructions, and the processor is configured to execute the computer-executable instructions to:
determine a target unit to be handled according to task information of a task to be executed;
select, according to item attribute information of the target unit to be handled, at least one candidate laneway in a stereoscopic warehouse, wherein the at least one candidate laneway conforms to the item attribute information;
select at least one target storage floor from a plurality of storage floors according to distribution information of the at least one candidate laneway in the plurality of storage floors and current floor information of the target unit to be handled;
determine a target storage location in the at least one target storage floor according to current location information of the target unit to be handled and storage location information of a candidate laneway in the at least one target storage floor; and
schedule a handling device to handle the target unit to be handled to the target storage location for storage.

20. A computer-readable storage medium having stored therein computer instructions that, when executed by a processor, cause the processor to implement steps of the handling scheduling method for the stereoscopic warehouse of any one of claims 1 to 17.
